# FASCICULE DE BREVET EUROPEEN

(11) **EP 2 328 132 B1**
(45) Date de publication et mention de la délivrance du brevet: **04.07.2018**
(21) Numéro de dépôt: 10189364.2
(22) Date de dépôt: 29.10.2010
(51) Int. Cl.: G08C 17/02, G08C 23/04, H02K 35/02, H02K 7/18

(54) **DISPOSITIF DE COMMANDE À DISTANCE**
FERNSTEUERUNGSVORRICHTUNG
REMOTE CONTROL DEVICE

(30) Priorité: 25.11.2009 FR 0958367
(43) Date de publication de la demande: 01.06.2011
(73) Titulaire: Schneider Electric Industries SAS, 92500 Rueil-Malmaison (FR)
(72) Inventeur: Attier, Pierre, 38240 Meylan (FR)
(74) Mandataire: Dufresne, Thierry

(56) Documents cités:
- EP-A1- 1 939 832
- WO-A1-2006/009540
- WO-A1-2009/020756
- FR-A1- 2 893 780

## Description

La présente invention se rapporte à un dispositif de commande à distance comportant notamment un générateur d'énergie permettant de convertir une énergie mécanique en énergie électrique.

Il est connu dans l'art antérieur des dispositifs de commande à distance employant un générateur d'énergie pour convertir une énergie mécanique en énergie électrique. Il s'agit par exemple d'interrupteurs sans fil dans lesquels une pression sur le bouton entraîne l'actionnement du générateur et la génération d'un courant électrique. Le courant électrique généré est employé par un émetteur pour envoyer un message à un récepteur distant associé à un dispositif à commander tel que par exemple une lampe. Le générateur peut par exemple être du type à induction électromagnétique ou de type piézoélectrique. Dans ces dispositifs, l'effort à fournir pour envoyer le message doit souvent être conséquent car le bouton coopère directement avec le générateur d'énergie. De plus, ces dispositifs ne sont pas adaptés pour être employés sous la forme de télécommande portable car trop volumineux et pas assez protégés pour résister à toutes les agressions de leur environnement.

Le document FR 2 893 780 A1 concerne un dispositif de télécommande alimenté par un dispositif autonome de génération d'énergie électrique.

Le but de l'invention est de proposer un nouveau dispositif de commande à distance permettant notamment de pallier les inconvénients de l'art antérieur présentés ci-dessus.

Ce but est atteint par un dispositif de commande à distance qui comporte :
- un boîtier doté d'un capot mobile entre deux positions, une position d'ouverture et une position de fermeture,
- une interface d'actionnement montée sur le boîtier et pouvant être masquée par le capot dans sa position de fermeture ou démasquée lorsque le capot est dans sa position d'ouverture,
- un générateur d'énergie coopérant avec le capot et destiné à convertir une énergie mécanique en énergie électrique lors d'un mouvement du capot entre les deux positions,
- un émetteur sans-fil alimenté par le générateur d'énergie et actionnable grâce à l'interface d'actionnement pour envoyer un message à un récepteur distant.

Selon une particularité, le dispositif comporte des moyens de stockage de l'énergie électrique générée par le générateur lors du passage de la position de fermeture à la position d'ouverture du capot et lors du passage de la position d'ouverture à la position de fermeture du capot.

Selon une autre particularité, le dispositif comporte des moyens d'entraînement mécaniques agencés entre le capot et le générateur et comportant un mécanisme de came et de suiveur de came.

Selon une autre particularité, le capot est mobile selon un mouvement de coulissement par rapport à une base du boîtier.

Selon une autre particularité, l'interface d'actionnement comporte un ou plusieurs boutons.

Selon une autre particularité, le générateur est à induction électromagnétique.

Selon une autre particularité, l'émetteur est à radiofréquence.

Selon une autre particularité, l'émetteur est de type infrarouge.

Selon une autre particularité, le récepteur est associé à un dispositif à commander.

Selon une autre particularité, le dispositif à commander est une lampe.

D'autres caractéristiques et avantages vont apparaître dans la description détaillée qui suit en se référant à un mode de réalisation donné à titre d'exemple et représenté par les dessins annexés sur lesquels :
- la figure 1 représente en vue de côté et en position fermée le dispositif de commande de l'invention,
- la figure 2 représente en vue de côté et en position ouverte le dispositif de commande de l'invention ainsi qu'un récepteur associé à une lampe à commander,
- la figure 3 représente en perspective un générateur d'énergie à induction électromagnétique pouvant être employé dans le dispositif de l'invention,
- la figure 4 représente en vue éclatée le générateur d'énergie de la figure 3,
- les figures 5A et 5B illustrent le fonctionnement du générateur d'énergie représenté en figure 3,
- la figure 6 montre un exemple de réalisation du dispositif de commande de l'invention.

L'invention consiste en un dispositif de commande à distance qui comporte notamment un générateur permettant de convertir une énergie mécanique en énergie électrique. Le principe de l'invention consiste notamment à séparer la fonction de génération d'énergie de la fonction d'activation de l'envoi du message. Plus précisément, le mouvement mécanique permettant d'actionner le générateur pour générer l'énergie électrique est différent du mouvement d'activation de l'émetteur permettant d'envoyer le message. L'utilisateur du dispositif de commande de l'invention doit donc effectuer au moins deux mouvements distincts pour valider l'envoi d'un message vers le récepteur.

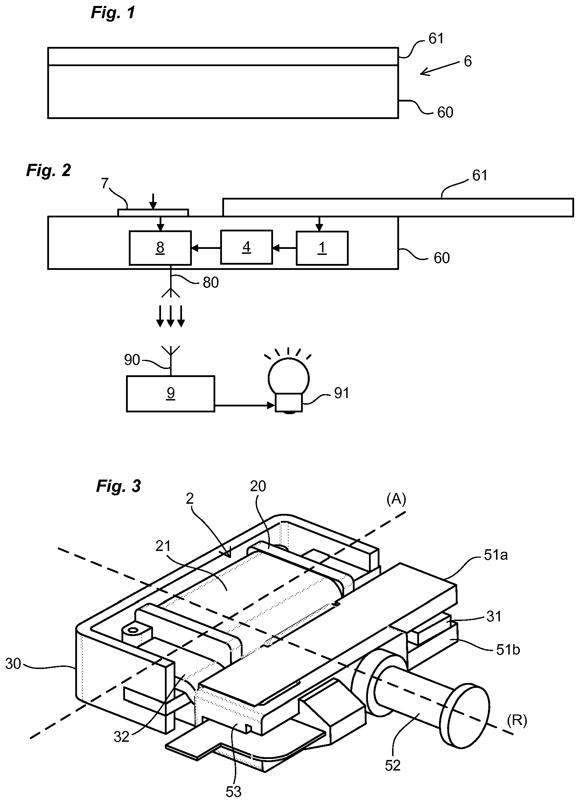

En référence aux figures annexées, le dispositif de commande à distance de l'invention comporte un boîtier 6, par exemple en matière plastique, ayant une base 60 et un capot 61 mobile apte à se déplacer sur la base 60 entre une position de fermeture (figure 1) et une position d'ouverture (figure 2). Le capot 61 peut réaliser par exemple un mouvement de coulissement, un mouvement de rotation ou tout autre type de mouvement par rapport à la base 60 entre ses deux positions. Dans la position de fermeture du capot 61, le dispositif de commande a par exemple une forme générale parallélépipédique. Pour réaliser un mouvement de coulissement, le capot 61 mobile est par exemple monté sur deux glissières parallèles longitudinales réalisées sur la base 60.

Le dispositif comporte en outre une interface d'actionnement montée sur la surface de la base 60 du boîtier 6 située en vis-à-vis du capot 61. Cette interface d'actionnement permet d'activer l'émetteur 8 pour l'envoi d'un message vers le récepteur 9. Selon l'invention, le capot 61 coulissant est destiné à masquer ou démasquer cette interface d'actionnement selon qu'il est respectivement en position de fermeture ou en position d'ouverture. L'interface d'actionnement comporte par exemple un capteur de position mécanique. L'interface d'actionnement peut par exemple se présenter sous la forme d'un ou plusieurs boutons (7, figure 2). Chaque bouton 7 sera par exemple une touche de type électronique telle que celle que l'on trouve sur un téléphone mobile.

Le dispositif comporte en outre un générateur 1 d'énergie logé à l'intérieur de la base 60 et destiné à convertir une énergie mécanique en énergie électrique. Ce générateur 1 est par exemple de type à induction électromagnétique ou de type piézoélectrique. L'énergie mécanique utilisée pour actionner le générateur 1 est fournie par le mouvement de coulissement du capot 61 sur la base 60 de sa position de fermeture vers sa position d'ouverture ou de sa position d'ouverture vers sa position de fermeture.

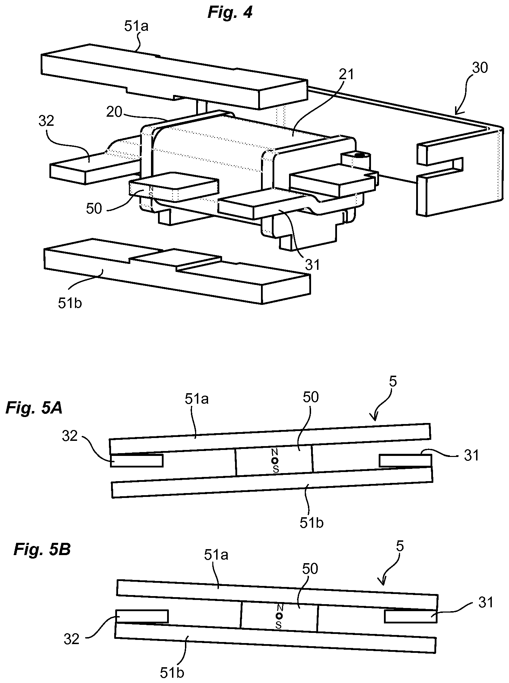

Un générateur 1 d'énergie à induction électromagnétique est représenté en figures 3 et 4. Il permet de générer un courant électrique dans une bobine d'excitation 2 en faisant varier le flux magnétique traversant la bobine 2 par une action mécanique externe.

En référence aux figures 3 à 5B, le générateur 1 comporte notamment un circuit magnétique formé d'une partie fixe et d'une partie mobile 5, à travers lesquels peut circuler un champ magnétique, et une bobine d'excitation 2.

Le flux magnétique dans le circuit magnétique est défini par la position angulaire instantanée de la partie mobile 5 par rapport à la partie fixe de sorte que le mouvement de la partie mobile 5 par rapport à la partie fixe crée une variation du flux magnétique à travers la bobine 2 ce qui entraîne la création d'un courant électrique dans la bobine 2. La tension créée aux bornes de la bobine 2 par la variation du flux magnétique dépend du temps et donc de la vitesse de déplacement de la partie mobile 5 par rapport à la partie fixe.

La bobine d'excitation 2 comporte une armature 20 réalisée dans un matériau amagnétique, sur laquelle est enroulé un bobinage 21 de N spires d'un fil conducteur (figures 3 et 4). L'armature 20 présente une ouverture centrale formée suivant un axe longitudinal (A) et dont les dimensions sont adaptées pour pouvoir être traversée plusieurs fois par le circuit magnétique. Sur les figures, la partie fixe du circuit magnétique traverse deux fois l'ouverture centrale de la bobine 2 en formant une boucle. Le circuit magnétique traverse donc une première fois l'ouverture centrale de la bobine 2, puis contourne la bobine 2 pour former la boucle, et traverse une seconde fois l'ouverture centrale de la bobine 2.

La partie mobile 5 du circuit magnétique présente par exemple une forme symétrique en H comportant par exemple un aimant permanent 50 pris entre deux couches 51a, 51b parallèles en matériau ferromagnétique, une couche supérieure 51a et une couche inférieure 51b. Cette partie mobile 5 est montée rotative sur un axe de rotation (R) horizontale perpendiculaire à l'axe longitudinal (A) de l'ouverture centrale de l'armature 20. L'axe de rotation (R) est matérialisé sur la figure 3 par une pièce cylindrique 52 solidaire d'une pièce support 53 (non représentée sur la figure 4) montée sur la partie mobile 5 et solidaire en rotation de la partie mobile 5.

La partie fixe du circuit magnétique est réalisée dans un matériau de forte perméabilité magnétique tel qu'un matériau ferromagnétique. En référence aux figures 3 et 4, la partie fixe comporte une embase 30 en forme de U enjambant la bobine d'excitation 2. La partie fixe du circuit magnétique comporte également un premier bras 31 et un second bras 32 distincts, non jointifs et non identiques, l'un des bras étant le reflet de l'autre dans un miroir. Le premier bras 31 est relié à la première extrémité de l'embase 30 tandis que le second bras 32 est relié à la seconde extrémité de l'embase 30. Ces deux bras 31, 32 sont en forme de L et traversent distinctement l'ouverture centrale de l'armature 20 suivant deux plans parallèles à l'axe longitudinal (A) de l'ouverture centrale de la bobine 2. Les deuxièmes extrémités de chacun des bras 31, 32 sont positionnées de part et d'autre de l'aimant permanent 50 de la partie mobile 5 et entre les deux couches ferromagnétiques 51a, 51b de la partie mobile 5. Chaque bras 31, 32 forme une butée pour la partie mobile 5 et définit deux plages d'appui opposées, une plage d'appui supérieure et une plage d'appui inférieure. La partie mobile 5 présente un degré de liberté en rotation entre les butées formées par chacun des bras 31, 32.

Comme l'embase 30 est agencée pour être positionné de part et d'autre de la bobine 2, le champ magnétique circulant dans les bras 31, 32 traverse toujours l'ouverture centrale de la bobine 2 dans le même sens. En conséquence, le champ magnétique traverse l'ouverture centrale de la bobine d'excitation 2 deux fois dans le même sens.

En référence aux figures 5A et 5B, on peut voir que la partie mobile 5 effectue un mouvement de balancier autour de son axe (R) et peut prendre deux positions extrêmes distinctes définies par les butées, dans chacune desquelles la partie mobile 5 est retenue par des forces magnétiques. Lorsque la partie mobile 5 est décollée de l'une de ses positions extrêmes, au-delà d'une position d'équilibre centrale, elle est instantanément attirée par effet magnétique vers l'autre position extrême. Ce phénomène est notamment décrit dans la demande de brevet GB 1 312 927.

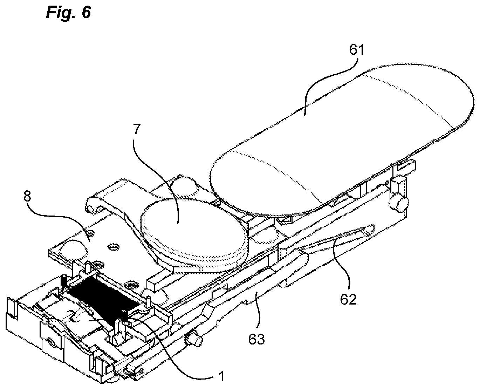

Selon l'invention, le générateur d'énergie est logé dans la base 60 du boîtier et est couplé mécaniquement au capot par l'intermédiaire de moyens mécaniques d'entraînement permettant de convertir le mouvement du capot 61 entre ses deux positions en un mouvement de la partie mobile 5 du générateur 1. En référence à la figure 6, ces moyens mécaniques d'entraînement peuvent par exemple comporter un mécanisme de came et de suiveur de came agencé entre le capot 61 et la partie mobile 5 du générateur 1. La came comporte par exemple une rampe 62 réalisée sur une pièce solidaire du capot 61 et coopérant avec un pion agencé à une première extrémité d'un levier 63 et formant le suiveur de came. La deuxième extrémité du levier 63 coopère avec la partie mobile 5 du générateur 1 d'énergie logé dans le boîtier. Dans son mouvement de coulissement, le capot 61 entraîne le levier dans un mouvement de pivotement, celui-ci entraînant alors la partie mobile du générateur 1 en rotation autour de son axe.

Le dispositif de commande de l'invention comporte également un émetteur 8 par exemple de type radiofréquence alimenté par le courant produit par le générateur 1 pour envoyer des signaux radio vers un récepteur 9 distant et des circuits électroniques 4 comportant notamment des moyens de stockage de l'énergie électrique générée par le générateur 1, tels que des capacités, pour lisser la quantité de courant à délivrer en aval à l'émetteur (figure 2). Le récepteur 9 est associé à un dispositif à commander tel que par exemple une lampe 91. Le dispositif de commande comporte une antenne 80 pouvant être intégrée au boîtier 6 et permettant d'envoyer le message vers le récepteur 9 qui comporte une antenne 90 correspondante lui permettant de recevoir le message. Le protocole de communication sans fil utilisé entre l'émetteur 8 et le récepteur 9 sera par exemple ZIGBEE. En variante de réalisation, l'émetteur peut être de type infrarouge.

Le générateur d'énergie, l'émetteur 8 et les circuits électroniques 4 sont placés sur un circuit d'activation commandé par l'interface d'actionnement. Selon l'invention, l'émetteur 8 peut ainsi être alimenté en courant par le générateur d'énergie 1 et est apte à être actionné grâce à l'interface d'actionnement pour valider l'envoi d'un message. Le message pourra comporter plusieurs trames successives identiques.

Pour utiliser le dispositif de l'invention, un utilisateur ouvre le capot 61 du dispositif ce qui permet de générer une énergie électrique. Cette énergie électrique est stockée dans les moyens de stockage d'énergie en attendant d'être utilisé par l'émetteur 8 pour l'envoi d'un message. Ensuite, alors que le capot 61 est en position d'ouverture, l'utilisateur peut agir sur l'interface d'actionnement par exemple en appuyant sur un ou plusieurs boutons 7. Une action sur un bouton 7 permet ainsi de fermer le circuit électrique d'activation de l'émetteur. L'énergie électrique stockée dans les moyens de stockage est alors injectée dans l'émetteur 8 qui envoie un message vers le récepteur 9 par radiofréquence. Si après l'envoi d'un message, toute l'énergie générée et stockée n'a pas été consommée, une nouvelle pression sur un bouton peut être réalisée. Lorsque l'utilisateur a terminé, il referme le capot 61 sur la base 60 permettant de générer une nouvelle quantité d'énergie qui est stockée dans les moyens de stockage.

## Revendications

1. Dispositif de commande à distance **caractérisé en ce qu'**il comporte :
- un boîtier doté d'un capot (61) mobile entre deux positions, une position d'ouverture et une position de fermeture,
- une interface d'actionnement montée sur le boîtier et pouvant être masquée par le capot dans sa position de fermeture ou démasquée lorsque le capot est dans sa position d'ouverture,
- un générateur d'énergie (1) coopérant avec le capot (61) et destiné à convertir une énergie mécanique en énergie électrique lors d'un mouvement du capot (61) entre les deux positions,
- un émetteur (8) sans-fil alimenté par le générateur (1) d'énergie et actionnable grâce à l'interface d'actionnement pour envoyer un message à un récepteur (9) distant.

2. Dispositif selon la revendication 1, **caractérisé en ce qu'**il comporte des moyens de stockage de l'énergie électrique générée par le générateur (1) lors du passage de la position de fermeture à la position d'ouverture du capot (61) et lors du passage de la position d'ouverture à la position de fermeture du capot (61).

3. Dispositif selon la revendication 1, **caractérisé en ce qu'**il comporte des moyens d'entraînement mécaniques agencés entre le capot (61) et le générateur (1) et comportant un mécanisme de came et de suiveur de came.

4. Dispositif selon l'une des revendications 1 à 3, **caractérisé en ce que** le capot (61) est mobile selon un mouvement de coulissement par rapport à une base (60) du boîtier.

5. Dispositif selon l'une des revendications 1 à 4, **caractérisé en ce que** l'interface d'actionnement comporte un ou plusieurs boutons (7).

6. Dispositif selon l'une des revendications 1 à 4, **caractérisé en ce que** le générateur (1) est à induction électromagnétique.

7. Dispositif selon l'une des revendications 1 à 5, **caractérisé en ce que** l'émetteur (8) est à radiofréquence.

8. Dispositif selon l'une des revendications 1 à 5, **caractérisé en ce que** l'émetteur est de type infrarouge.

9. Dispositif selon l'une des revendications 1 à 8, **caractérisé en ce que** le récepteur est associé à un dispositif à commander.

10. Dispositif selon la revendication 9, **caractérisé en ce que** le dispositif à commander est une lampe.

## Patentansprüche

1. Fernsteuerungsvorrichtung, **dadurch gekennzeichnet, dass** sie aufweist:
- ein Gehäuse, das mit einer Abdeckung (61) ausgestattet ist, die zwischen einer Öffnungs- und einer Schließposition bewegbar ist,
- eine Betätigungsschnittstelle, die an dem Gehäuse angebracht ist und die mit der Abdeckung in ihrer Schließposition abgedeckt werden kann oder aufgedeckt werden kann, wenn sich die Abdeckung in ihrer Öffnungsposition befindet,
- einen Energiegenerator (1), der mit der Abdeckung (61) zusammenwirkt und dazu bestimmt ist, während einer Bewegung der Abdeckung (61) zwischen den beiden Positionen eine mechanische Energie in elektrische Energie umzuwandeln,
- einen drahtlosen Sender (8), der von dem Energiegenerator (1) versorgt wird und mithilfe der Betätigungsschnittstelle betätigbar ist, um eine Nachricht an einen entfernten Empfänger (9) zu senden.

2. Vorrichtung nach Anspruch 1, **dadurch gekennzeichnet, dass** sie Einrichtungen zum Speichern der elektrischen Energie aufweist, die von dem Generator (1) während des Übergangs von der Schließposition in die Öffnungsposition der Abdeckung (61) und während des Übergangs von der Öffnungsposition in die Schließposition der Abdeckung (61) erzeugt wird.

3. Vorrichtung nach Anspruch 1, **dadurch gekennzeichnet, dass** sie mechanische Antriebseinrichtungen aufweist, die zwischen der Abdeckung (61) und dem Generator (1) angeordnet sind und einen Nocken- und Nockenfolgermechanismus aufweisen.

4. Vorrichtung nach einem der Ansprüche 1 bis 3, **dadurch gekennzeichnet, dass** die Abdeckung (61) in Bezug auf eine Basis (60) des Gehäuses gleitbeweglich ist.

5. Vorrichtung nach einem der Ansprüche 1 bis 4, **dadurch gekennzeichnet, dass** die Betätigungsschnittstelle eine oder mehrere Tasten (7) aufweist.

6. Vorrichtung nach einem der Ansprüche 1 bis 4, **dadurch gekennzeichnet, dass** der Generator (1) ein elektromagnetischer Induktionsgenerator ist.

7. Vorrichtung nach einem der Ansprüche 1 bis 5, **dadurch gekennzeichnet, dass** der Sender (8) ein Hochfrequenzsender ist.

8. Vorrichtung nach einem der Ansprüche 1 bis 5, **dadurch gekennzeichnet, dass** der Sender ein Infrarotsender ist.

9. Vorrichtung nach einem der Ansprüche 1 bis 8, **dadurch gekennzeichnet, dass** der Empfänger einer steuerbaren Vorrichtung zugeordnet ist.

10. Vorrichtung nach Anspruch 9, **dadurch gekennzeichnet, dass** die steuerbare Vorrichtung eine Lampe ist.

## Claims

1. Remote control device, **characterized in that** it includes:
- a housing equipped with a cover (61) able to move between two positions, an open position and a closed position,
- an actuation interface mounted on the housing and able to be concealed by the cover in its closed position or exposed when the cover is in its open position,
- an energy generator (1) interacting with the cover (61) and intended to convert mechanical energy into electrical energy when the cover (61) moves between the two positions,
- a wireless transmitter (8) supplied by the energy generator (1) and able to be actuated by virtue of the actuation interface so as to send a message to a remote receiver (9).

2. Device according to Claim 1, **characterized in that** it includes means for storing the electrical energy generated by the generator (1) when the cover (61) changes from the closed position to the open position and when the cover (61) changes from the open position to the closed position.

3. Device according to Claim 1, **characterized in that** it includes mechanical driving means positioned between the cover (61) and the generator (1) and including a cam and cam follower mechanism.

4. Device according to one of Claims 1 to 3, **characterized in that** the cover (61) is able to move in a sliding motion with respect to a base (60) of the housing.

5. Device according to one of Claims 1 to 4, **characterized in that** the actuation interface includes one or more buttons (7).

6. Device according to one of Claims 1 to 4, **characterized in that** the generator (1) is an electromagnetic induction generator.

7. Device according to one of Claims 1 to 5, **characterized in that** the transmitter (8) is a radiofrequency transmitter.

8. Device according to one of Claims 1 to 5, **characterized in that** the transmitter is of infrared type.

9. Device according to one of Claims 1 to 8, **characterized in that** the receiver is associated with a device to be controlled.

10. Device according to Claim 9, **characterized in that** the device to be controlled is a lamp.
